# EUROPEAN PATENT SPECIFICATION

(11) **EP 2 913 215 B1**
(45) Date of publication and mention of the grant of the patent: **30.08.2017**
(21) Application number: 15156433.3
(22) Date of filing: 24.02.2015
(51) Int. Cl.: B60K 15/063, B62D 49/00

(54) **Working vehicle**
Nutzfahrzeug
Véhicule de travail

(30) Priority: 27.02.2014 JP 2014036923
(43) Date of publication of application: 02.09.2015
(73) Proprietor: Iseki & Co., Ltd., Matsuyama-shi, Ehime 799-2692 (JP)
(72) Inventor: Ishioka, Narutoshi, Tobe-cho, Iyo-gun, Ehime 791-2193 (JP)
(74) Representative: Spengler, Robert

(56) References cited:
- EP-A1- 1 661 795
- EP-A1- 1 886 863
- US-A- 5 207 187

## Description

### BACKGROUND OF THE INVENTION

### Field of the Invention

The present invention relates to, for example, a working vehicle such as an agricultural tractor or the like, with a fuel tank arranged at the rear part inside the engine bonnet.

### Related art of the Invention

Document EP 1 886 863 A1, which constitutes the closest prior art, discloses a traveling vehicle in which supply of fuel to a fuel tank is made easy without making the fuel tank interfere with a drive shaft or a front wheel drive shaft and without lowering minimum ground clearance of a traveling vehicle. A fuel tank is disposed between an engine and a seat and below a steering wheel, and a groove is provided longitudinally at the substantial lateral center of the fuel tank. A power steering valve is attached to the lower portion of the steering wheel, and grooves in which hydraulic pipings connected to the power steering valve are arranged is formed in the fuel tank.

Document EP 1 661 795 A1 discloses a tractor which realizes a reduction of time and efforts necessary for an assembling operation of a hood. Here, a hood is split into a fixed-side forming body which is fixed to the body frame and an open-and-close side forming body which can open/close an upper surface of the fixed-side forming body, and the fixed-side forming body is split into a left half forming member and a right half forming member. On the other hand, a connecting support body is formed on the front portion of the body frame in an upwardly raised state and, front-end abutting portions of left-and-right-side half forming members are connected and fixed to the connecting support body using a connecting body in a state that the front-end abutting portions are sandwiched between the connecting support body and the connecting body in the longitudinal direction.

Known is a tractor of a power steering specification with a steering post and a steering handle provided behind the fuel tank (for example, refer to Japanese Patent Application Publication No. 2003-137116).

In a tractor like that, a controller unit of an oil-pressure type which controls the power steering cylinder is fixed to the lower part of the steering column which supports the steering shaft. And, the steering column is attached to the machine-body via vibration-isolation members, and the vibration-isolation members are arranged at the lower side and the upper side of the steering column.

Additionally, also known is a tractor such that, inside the bonnet of the tractor which is an agricultural machine, the resin-made or metal-plate-made fuel tank is covered by a gate-shaped operation panel framework provided in a standing manner from the vehicle-body, and is supported by left and right tank stays and the like, so that, by providing a heat-shielding plate in a standing manner at the front face side of the fuel tank and preventing a discharged wind from the engine side from directly blowing against the fuel tank, the rear part of the bonnet is effectively utilized to arrange and configure the fuel tank (for example, refer to Japanese Patent Application Publication No. 2000-318650).

### SUMMARY OF THE INVENTION

However, in the conventional tractor described above, since the machine-body front-and-rear length is required to be comparatively short, storage of the oil-pressure hoses for power steering to which caution is necessary in treatment has not been easy.

An object of the present invention is, considering the conventional problems described above, to fumish a working vehicle being able to make the oil-pressure hoses for power steering be more easily stored.

The 1^{st} aspect of the present invention is a working vehicle (1), comprising:
an engine (4);
a bonnet (8) which covers the engine (4);
an operation part (2a);
a steering handle (3) of the operation part (2a);
a power steering controller unit (100) to which the steering handle (3) is joined; and plural oil-pressure hoses (200) joined to the power steering controller unit (100),
**characterized in that**
a front-and-rear direction is a movement direction on an occasion when the working vehicle (1) moves straight on, and
the working vehicle (1) comprises:
   a partition plate (12) which separates the engine (4) and the operation part (2a);
   a fuel tank (18) with the partition plate (12) being arranged between the engine (4) and the fuel tank (18) with reference to the front-and-rear direction,
   a pedestal (300) on which the power steering controller unit (100) is placed; and
   a supporting pipe member (400) which is connected to a left side and a right side of the pedestal (300) so as to support the pedestal (300), and extends in an up-and-down direction, wherein
   an oil-supplying port (18c) is formed on an upper-face of a fuel tank convex part (18b) of the fuel tank (18) which protrudes to a front side, where a fuel cap (20) of the oil-supplying port (18c) is arranged in a notch part (C) formed at an upper-face of the bonnet (8),
   the oil-pressure hoses (200) include: a power steering hose (202) through which oil goes that goes into the power steering controller unit (100); a return hose (203) through which oil goes that has gone out from the power steering controller unit (100); and cylinder hoses (204L, 204R) through which oil goes at time of right-turn execution or time of left-turn execution,
   on a face of the fuel tank (18) reverse to a face of the fuel tank (18) which faces the partition plate (12), a concave part (18p) through which the oil-pressure hoses (200) pass is formed so as to extend in the up-and-down direction,
   in the concave part (18p), the power steering hose (202), the return hose (203), and the cylinder hoses (204L, 204R) are arranged.

By means of this, since on the rear face of the fuel tank (18), the concave part (18p) through which the oil-pressure hoses (200) pass is formed so as to extend in the up-and-down direction, the oil-pressure hoses (200) are able to be made to be more easily stored.

Furthermore, since the supporting pipe member (400) which extends in the up-and-down direction is connected to the left side and the right side of the pedestal (300) so as to support the pedestal (300), between the left side and the right side of the supporting pipe member (400) a space can be sufficiently ensured, and attachment/detachment and the like of the oil-pressure hoses (200) are able to be performed with more ease.

The 2^{rd} aspect of the present invention is a working vehicle (1) according to the 1^{st} aspect of the present invention, wherein
an upper-end part (400u) of the supporting pipe member (400) is connected to the pedestal (300),
a lower-end part (400d) of the supporting pipe member (400) is bending, and
the oil-pressure hoses (200) are supported by an upper-face of the lower-end part (400d) of the supporting pipe member (400).

By means of this, since the oil-pressure hoses (200) are supported by the upper-face of the lower-end part (400d) of the supporting pipe member (400), a fear that the oil-pressure hoses (200) are damaged is able to be made to lessen.

The 3rd aspect of the present invention is a working vehicle (1) according to the 1^{st} aspect of the present invention, comprising:
a transmission case (7);
a supporting body (500) which supports a lower-end part (400d) of the supporting pipe member (400), and is connected to the transmission case (7); and
a flow-dividing valve (210) of the oil-pressure hoses (200), wherein
an upper-end part (400u) of the supporting pipe member (400) is connected to the pedestal (300), and
the flow-dividing valve (210) is adjacent to at least one of left and right of the supporting body (500), and is arranged below the fuel tank (18).

By means of this, since the flow-dividing valve (210) is adjacent to at least one of the left and the right of the supporting body (500), and is arranged below the fuel tank (18), joining of the oil-pressure hoses (200) to the flow-dividing valve (210) can be performed by compact short-distance-joining, and a crew's space being for a worker is able to be sufficiently ensured.

The 4^{th} aspect of the present invention is a working vehicle (1) according to the 2^{nd} aspect of the present invention, comprising:
a transmission case (7);
a supporting body (500) which supports the lower-end part (400d) of the supporting pipe member (400), and is connected to the transmission case (7); and
a flow-dividing valve (210) of the oil-pressure hoses (200), wherein
the flow-dividing valve (210) is adjacent to at least one of left and right of the supporting body (500), and is arranged below the fuel tank (18).

By means of this, since the flow-dividing valve (210) is adjacent to at least one of the left and the right of the supporting body (500), and is arranged below the fuel tank (18), joining of the oil-pressure hoses (200) to the flow-dividing valve (210) can be performed by compact short-distance-joining, and a crew's space being for a worker is able to be sufficiently ensured.

By the present invention, a working vehicle being able to make the oil-pressure hoses for power steering be more easily stored can be furnished.

### BRIEF DESCRIPTION OF THE DRAWINGS

FIG. 1 is a left side view of the tractor of Embodiment 1 in the present invention;
FIG. 2 is a partial perspective view of the front part of the tractor of Embodiment 1 in the present invention;
FIG. 3 is a partial perspective view of the periphery of the power steering controller unit of the tractor of Embodiment 1 in the present invention;
FIG. 4A is a partial perspective view of the lower part of the steering handle of the tractor of Embodiment 1 in the present invention, and
FIG. 4B is a partial perspective view of the lower part of the manual steering handle of the tractor of an embodiment in an invention related to the present invention;
FIG. 5A is a rear view of the lower part of the steering handle of the tractor of Embodiment 1 in the present invention, and
FIG. 5B is a right side view of the lower part of the steering handle of the tractor of Embodiment 1 in the present invention;
FIG. 6 is a partial perspective view (No. 1) of the periphery of the front PTO shaft of the tractor of Embodiment 1 in the present invention;
FIG. 7 is a partial perspective view (No. 2) of the periphery of the front PTO shaft of the tractor of Embodiment 1 in the present invention;
FIG. 8 is a partial perspective view (No. 3) of the periphery of the front PTO shaft of the tractor of Embodiment 1 in the present invention;
FIG. 9 is a perspective view of the periphery of the engine of Embodiment 2 in an invention related to the present invention;
FIG. 10 is a plan view of the periphery of the engine of Embodiment 2 in an invention related to the present invention;
FIG. 11 is a rear view of the bonnet of Embodiment 2 in an invention related to the present invention;
FIG. 12A is a perspective view of the state where the bonnet of Embodiment 2 in an invention related to the present invention is opened, and
FIG. 12B is a section view of the front part of the bonnet of Embodiment 2 in an invention related to the present invention;
FIG. 13A is a perspective view of the front part of the tractor of Embodiment 2 in an invention related to the present invention,
FIG. 13B is a perspective view of the opening-and-closing supporting part of the rear part of the bonnet of Embodiment 2 in an invention related to the present invention, and
FIG. 13C is a section view of the opening-and-closing supporting part of the rear part of the bonnet of Embodiment 2 in an invention related to the present invention;
FIG. 14A is a right side view of the state where the bonnet of Embodiment 2 in an invention related to the present invention is closed, and
FIG. 14B is a partial enlarged right side view of the state where the bonnet of Embodiment 2 in an invention related to the present invention is closed;
FIG. 15 is a right side view of the state where the bonnet of Embodiment 2 in an invention related to the present invention is opened;
FIG. 16 is a perspective view of the partition plate and the fuel tank of Embodiment 2 in an invention related to the present invention;
FIG. 17 is a perspective view of the engine of Embodiment 2 in an invention related to the present invention;
FIG. 18A is a left side view of the partition plate, the fuel tank and the dashboard of Embodiment 2 in an invention related to the present invention, and
FIG. 18B is a rear view of the partition plate, the fuel tank and the dashboard of Embodiment 2 in an invention related to the present invention;
FIG. 19 is a bottom view of the radiator of Embodiment 2 in an invention related to the present invention; and
FIG. 20 is a perspective view of the periphery of the engine of Embodiment 2 in an invention related to the present invention.

### Description of Symbols

- 2a: operation part
- 3: steering handle
- 4: engine
- 8: bonnet
- 12: partition plate
- 12a: swelling part
- 12af: first swelling part
- 12as: second swelling part
- 12u: upper-half part
- 12d: lower-half part
- 18: fuel tank
- 18b: convex part
- 18c: oil-supplying port
- 18p: concave part
- 21: fuel saucer
- 21a: engaging groove
- 51: intermediate plate
- 100: power steering controller unit
- 200: oil-pressure hoses
- 201: first hose
- 202: second hose
- 203: third hose
- 204L, 204R: fourth hose
- 205: fifth hose
- 206: sixth hose
- 210: flow-dividing valve
- 220: gear pump
- 230R: cylinder
- 300: pedestal
- 400: supporting pipe member
- 401L, 401R: pipe
- 500: supporting body
- 600: front PTO shaft
- 700: manual steering post
- 701: pedestal for a manual steering post

### PREFERRED EMBODIMENTS OF THE INVENTION

In the following, referring to the drawings, descriptions are given in detail regarding embodiments in the present invention.

### (Embodiment 1)

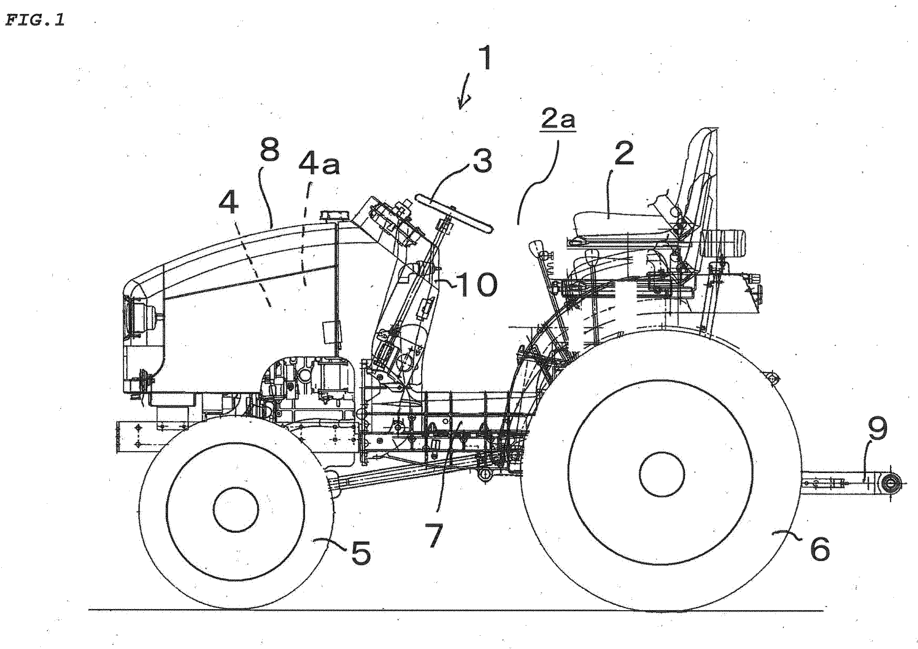

In the beginning, referring to FIG. 1, descriptions are specifically given regarding the configuration and action of the tractor 1 of the present embodiment.

Additionally, FIG. 1 is a left side view of the tractor 1 of Embodiment 1 in the present invention.

In the following descriptions, the tractor 1 being for agriculture or for various-working-machine-traction which is a working vehicle is shown as an example. The front-and-rear direction is the front-and-rear direction of the tractor 1. More specifically, the front-and-rear direction is the movement direction on the occasion when this tractor 1 moves straight on, the frontward side in the movement direction is said to be the front side in the front-and-rear direction, and the rearward side the rear side in the front-and-rear direction. The movement direction of the tractor 1 is the direction from the operation seat 2 of the tractor 1 towards the steering handle 3 at the time when the tractor 1 moves straight on, the side of the steering handle 3 becomes the front side, and the side of the operation seat 2 the rear side.

Moreover, the vehicle-width direction is the direction which is orthogonal to the front-and-rear direction in a horizontal face. In the present embodiment, the right side in a state where the front side in the front-and-rear direction is viewed is said to be the right side in the vehicle-width direction, and the left side in a state where the front side in the front-and-rear direction is viewed the left side in the vehicle-width direction. Further, the vertical direction is the direction which is orthogonal to the front-and-rear direction and the vehicle-width direction. These front-and-rear direction, vehicle-width direction and vertical direction are orthogonal to each other.

FIG. 1 is a whole left side view of the tractor 1 in present Embodiment 1. The tractor 1 is a working vehicle such as an agricultural tractor or the like, which performs working in a farm field or the like, while running on its own by the motive force the engine 4 as a motive force source generates. The tractor 1 comprises the front wheels 5, the rear wheels 6, the engine 4, and the speed-changing device (the transmission case) 7. The front wheels 5 are provided as wheels being mainly for steerage, namely, steered wheels. The rear wheels 6 are provided as wheels being mainly for drive, namely, driven wheels. To the rear wheels 6, the rotary motive force generated at the engine 4, which is loaded inside the engine room 4a inside the bonnet 8 of the machine-body front part, is able to be transmitted with appropriate reduction in speed at the speed-changing device (the transmission case) 7, and the rear wheels 6 generate drive force by this rotary motive force. Moreover, this speed-changing device 7 is able to transmit the rotary motive force, generated at the engine 4, also to the front wheels 5 as necessary and, in this case, the four wheels of the front wheels 5 and rear wheels 6 become driven wheels and generate drive force.

Namely, for the speed-changing device 7, switching between two-wheel drive and four-wheel drive is able to be carried out, the rotary motive force of the engine 4 is reduced in speed, and the rotary motive force which has been reduced in speed is able to be transmitted to the front wheels 5 and the rear wheels 6. Moreover, at the machine-body rear part, the connecting device 9 is provided on which a working machine such as a rotary (not shown) or the like is able to be installed. The connecting device 9 is, for example, configured at the 3-point link mechanism which has the left and right lower links, the central top link and the like, and a working machine is connected to the machine-body rear part of the tractor 1 by this 3-point link mechanism.

And, the left and right lift arms (not shown) are rotated with oil pressure, and thereby via the lift rods (not shown), the lower links and the like which connect with these lift rods the working machine can be made to ascend and descend.

From the dashboard 10 at the front side of the operation seat 2 the steering handle 3 is provided in a standing manner, on the floor at the left side of the dashboard 10 the clutch pedal is arranged, on the floor at the right side of the dashboard 10 the left and right brake pedals are arranged, and on the floor at the right side of these left and right brake pedals the accelerator pedal is arranged. Moreover, around the operation seat 2 other various manipulation pedals and various manipulation levers such as the speed-changing lever and the like are arranged. Moreover, at the left side below the steering handle 3 the frontward/rearward movement lever is arranged, and at the right side below the steering handle 3 the accelerator lever and the like are arranged.

Next, referring to FIGS. 1-5, descriptions are more specifically given regarding the configuration and action of the tractor 1 of the present embodiment.

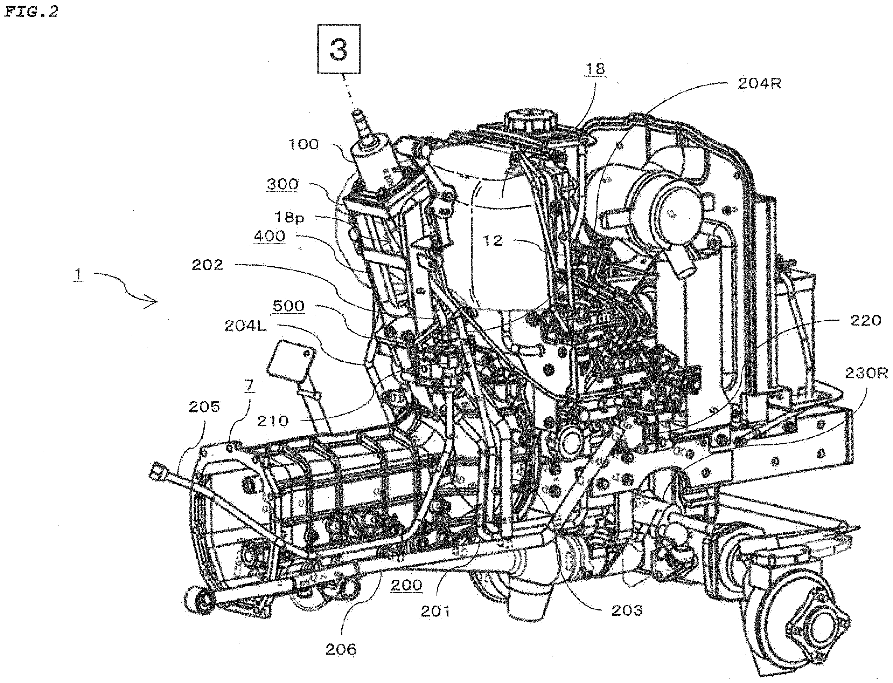

Additionally, FIG. 2 is a partial perspective view of the front part of the tractor 1 of Embodiment 1 in the present invention.

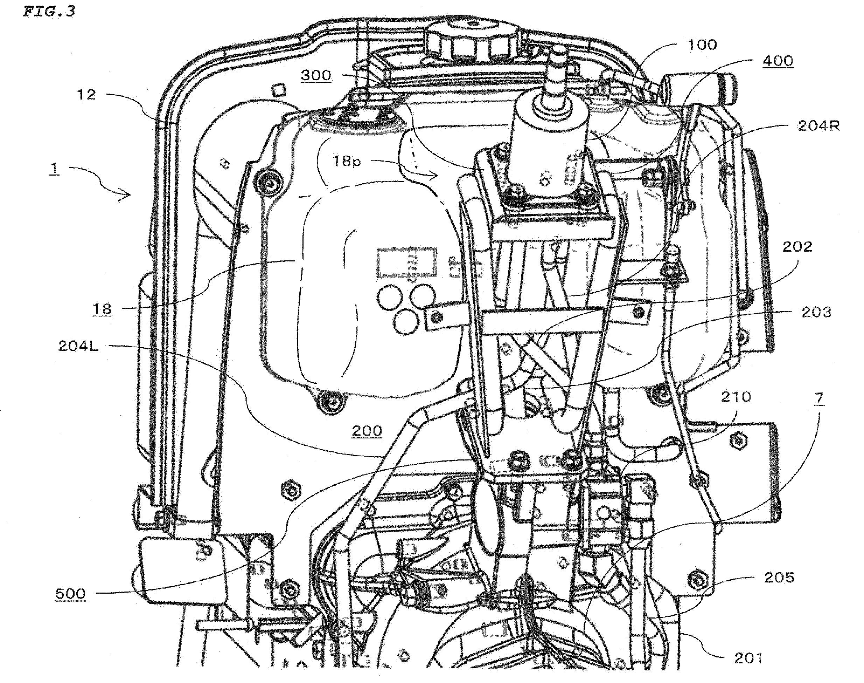

Moreover, FIG. 3 is a partial perspective view of the periphery of the power steering controller unit 100 of the tractor 1 of Embodiment 1 in the present invention.

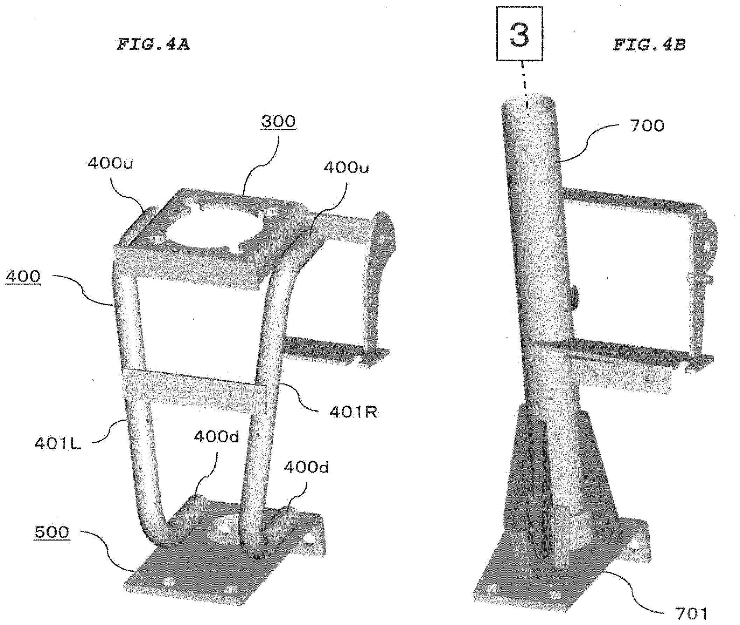

Moreover, FIG. 4A is a partial perspective view of the lower part of the steering handle 3 of the tractor 1 of Embodiment 1 in the present invention, and FIG. 4B is a partial perspective view of the lower part of the manual steering handle of the tractor of an embodiment in an invention related to the present invention. The manual steering post 700 is attached to the pedestal 701 for a manual steering post.

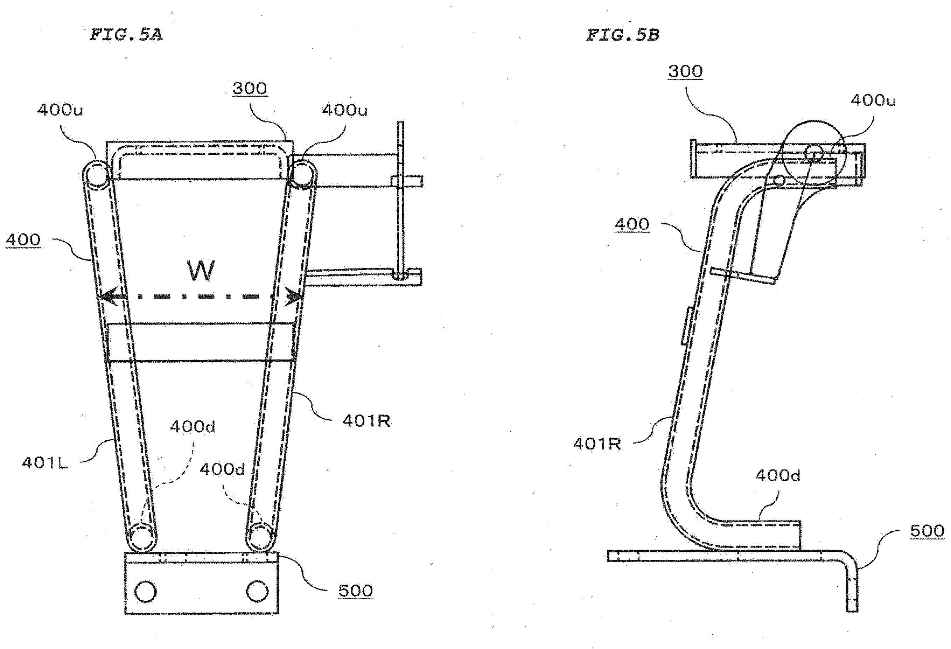

Moreover, FIG. 5A is a rear view of the lower part of the steering handle 3 of the tractor 1 of Embodiment 1 in the present invention, and FIG. 5B is a right side view of the lower part of the steering handle 3 of the tractor 1 of Embodiment 1 in the present invention.

The engine room 4a, and the operation part 2a which has the power steering controller unit 100, the operation seat 2, the steering handle 3 and the like are separated with the partition plate 12.

The operation part 2a is provided behind the engine 4. The fuel tank 18 is arranged behind the partition plate 12.

To the upper-face of the power steering controller unit 100, the steering handle 3 is joined. To the lower-face of the power steering controller unit 100, the oil-pressure hoses 200 are joined. Ahead of the power steering controller unit 100, the fuel tank 18 is arranged. And, on the rear face of the fuel tank 18, the concave part 18p through which the oil-pressure hoses 200 pass is formed so as to extend in the up-and-down direction.

The plural oil-pressure hoses 200 include the first hose 201, the second hose 202, the third hose 203, the fourth hoses 204L and 204R, the fifth hose 205, and the sixth hose 206.

The second hose 202 is a power steering hose, the third hose 203 is a return hose, and the fourth hoses 204L and 204R are cylinder hoses.

At the time when the tractor 1 moves straight on, the oil which has gone out from the gear pump 220 goes through the first hose 201, goes by way of the flow-dividing valve 210, goes through the second hose 202 to go into the power steering controller unit 100, and goes through the third hose 203 to return to the gear pump 220.

And, at the time of right-turn execution, the oil which has gone out from the power steering controller unit 100 goes through the fourth hose 204R at the right side to go into and go out from the cylinder 230R at the right side.

Additionally, in FIG. 2 the configuration at the right side is viewed well and the configuration at the left side is hidden, but the configuration at the left side is similar to the configuration at the right side, and at the time of left-turn execution the oil which has gone out from the power steering controller unit 100 goes through the fourth hose 204L at the left side to go into and go out from the cylinder (not shown) at the left side.

Further, the oil which has gone out from the gear pump 220 goes through the first hose 201, goes by way of the flow-dividing valve 210, goes through the fifth hose 205 to go into the ascending-and-descending cylinder (not shown) of the working machine such as a rotary or the like, and goes through the sixth hose 206 to return to the gear pump 220.

On the rear face of the fuel tank 18, the concave part 18p in which the second hose 202, the third hose 203, the fourth hoses 204L and 204R and the like are arranged is formed. Because of that, while the position of the steering handle 3 is made closer to the front side so that an increase of the machine-body front-and-rear length is suppressed, routing of the oil-pressure hoses is intensively performed so that the oil-pressure hoses 200 are made to be more easily stored, and the capacity of the fuel tank 18 can be sufficiently ensured.

The shape of the supporting pipe member 400 is an approximate U-shape which has a front-lowering portion that gently curves as described below, and the shape of the concave part 18p of the fuel tank 18 is configured so as to not combine with but go parallel with the shape of the supporting pipe member 400 like that. Because of that, the limited space in a small-sized tractor is utilized with effect, and routing of the oil-pressure hoses and steering arrangement can be favorably performed.

Next, mainly referring to FIGS. 4 and 5, descriptions are minutely given regarding the supporting pipe member 400 which has the pipe 401L at the left side and the pipe 401R at the right side, and has a configuration with left-and-right symmetry.

The portion at the left side of an approximate inverted-and-truncated-V-shape in rear view corresponds to the pipe 401L at the left side, and the portion at the right side of the approximate inverted-and-truncated-V-shape in rear view corresponds to the pipe 401R at the right side.

In the present specification, the "approximate inverted-and-truncated-V-shape" means the shape of a portion of the letter V, the shape of which is obtained by turning the letter V upside down and cutting off its vertex.

Between the pipe 401L and the pipe 401R, a space is sufficiently ensured.

The supporting pipe member 400 supports the pedestal 300 on which the power steering controller unit 100 is placed. And, to the left side and the right side of the pedestal 300, the upper-end part 400u of the supporting pipe member 400 which extends in the up-and-down direction is connected.

The lower-end part 400d of the supporting pipe member 400 is bending. The oil-pressure hoses 200 are supported by the upper-face of the lower-end part 400d of the supporting pipe member 400.

The power steering bracket which is an attaching part of the power steering controller unit 100 is configured, utilizing a pipe frame such that rigidity and vibration-resistance are large with light weightness because the inner part is hollow, that the volume of the occupancy space is small, and that even with interference with a neighboring member there is little fear of damaging the neighboring member like that. Because of that, a tool-space at the time when an assembly-worker utilizes a tool and performs assembly is sufficiently ensured, and attachment/detachment and the like of the oil-pressure hoses can be performed with more ease. And, there is little fear that the oil-pressure hoses routed are damaged, and without concern about hose damage the size of the fuel tank 18 is made sufficiently large so that its capacity can be sufficiently ensured. Further, a bad influence by vibration at the time when the tractor acts can be decreased.

The shape of the supporting pipe member 400 is in rear view an approximate inverted-and-truncated-V-shape which has the left-and-right width W that is large at the upper side and small at the lower side, and is in side view an approximate U-shape which has a front-lowering portion that gently curves.

Additionally, reasons why the approximate inverted-and-truncated-V-shape in rear view is desirable are as follows. Namely, the left-and-right width W is made large at the upper side where it is necessary to perform tank accommodation, and the left-and-right width W is made small at the lower side where it is sufficient if routing of the oil-pressure hoses can be performed. Then, even if it is difficult to make small the unit whole size of the supporting pipe member 400, while an increase of the unit whole size is suppressed, the capacity of the fuel tank 18 can be sufficiently ensured also in a small-sized tractor.

Moreover, reasons why the approximate U-shape in side view is desirable are as follows. Namely, at the upper-face of the pipe frame lower-end part, where the oil-pressure hoses routed interfere easily, round pipes which are bending are utilized. Then, since there is no necessity to expressly stick insulators and the like, while a fear that the oil-pressure hoses are damaged is made to lessen, improvement of assembling like low-pricing, light-weightness and assembly-number-reduction, reduction in the number of components, and the like can be promoted.

Additionally, it is desirable to also make the manual steering post 700 pass through the concave part 18p of the fuel tank 18.

Next, mainly referring to FIGS. 2 and 3, descriptions are minutely given regarding the flow-dividing valve 210.

The supporting body 500 supports the lower-end part 400d of the supporting pipe member 400, and is connected to the transmission case 7. And, the flow-dividing valve 210 of the oil-pressure hoses 200 is adjacent to the right of the supporting body 500, and is arranged below the fuel tank 18.

Of course, the flow-dividing valve 210 may be adjacent to the left of the supporting body 500, and be arranged below the fuel tank 18, and could be adjacent to at least one of the left and the right of the supporting body 500, and be arranged below the fuel tank 18.

For example, the 3-point link mechanism described above which realizes supporting with three points of the one upper-link and two lower-links that support the rotary, also called a 3P (Points) link mechanism, and the flow-dividing valve 210 for coping with power steering are arranged at at least one of the left and the right of the supporting body 500, and are arranged at the lower side of the fuel tank 18. Because of that, routing of the oil-pressure hoses is performed by compact short-distance-joining and, while a crew's space being for a worker is sufficiently ensured, improvement of assembling like light-weightness and assembly-number-reduction, reduction in the number of components, and the like can be promoted.

Additionally, the configuration where the flow-dividing valve 210 is arranged inside the dashcover (not shown) is particularly effective in the configuration of a small-sized tractor where it is desirable to use one gear pump for multiple purposes as in the present embodiment, not in the configuration where plural gear pumps like a gear pump being for the ascending-and-descending cylinder of the working machine such as a rotary or the like, and a gear pump being for steering are used at the same time.

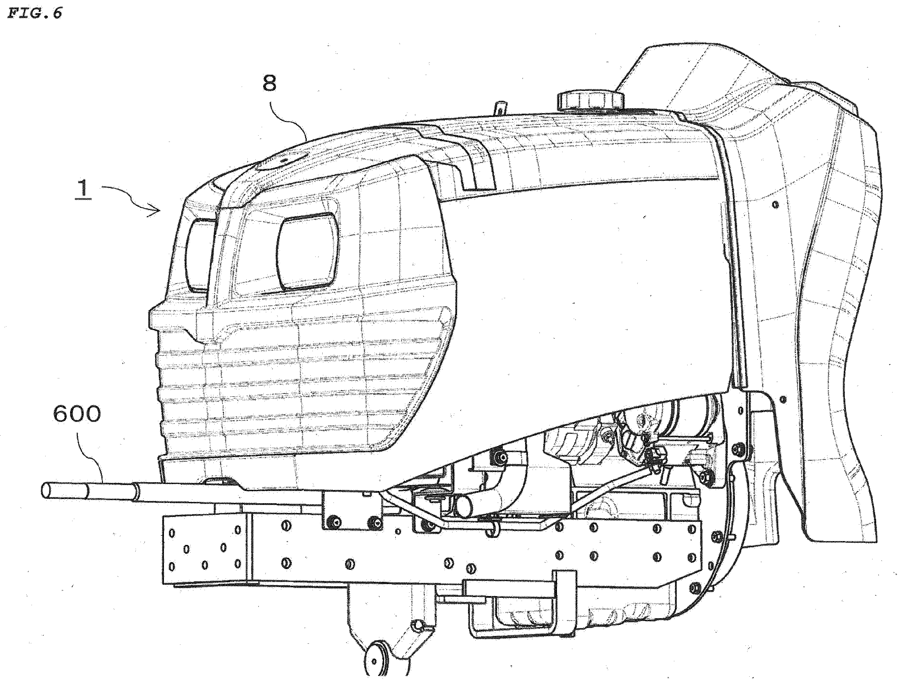

Next, mainly referring to FIGS. 6-8, descriptions are minutely given regarding the front PTO (Power Take Off) shaft 600.

Additionally, FIGS. 6-8 are partial perspective views (Nos. 1-3) of the periphery of the front PTO shaft 600 of the tractor 1 of Embodiment 1 in the present invention.

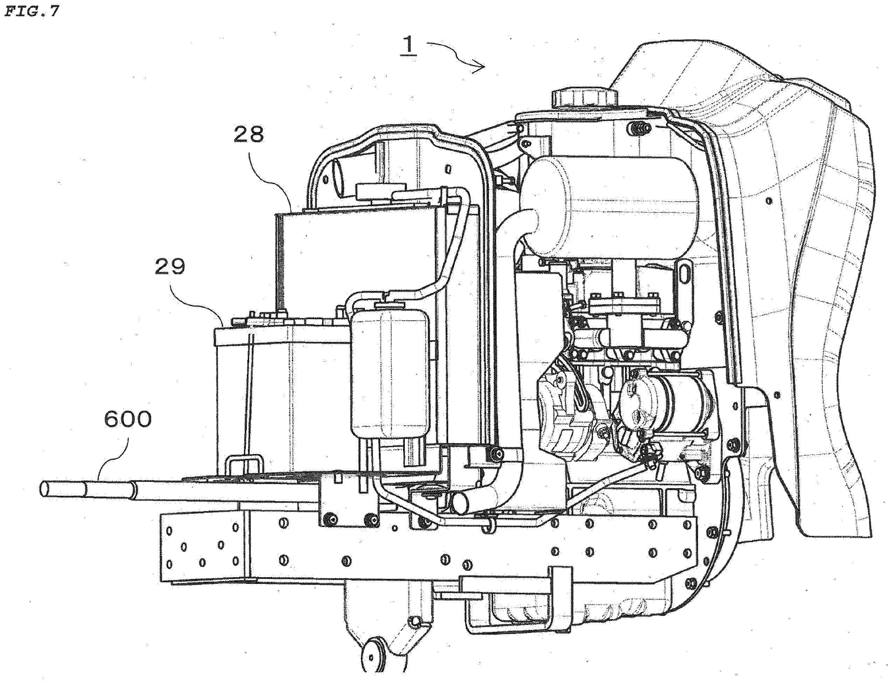

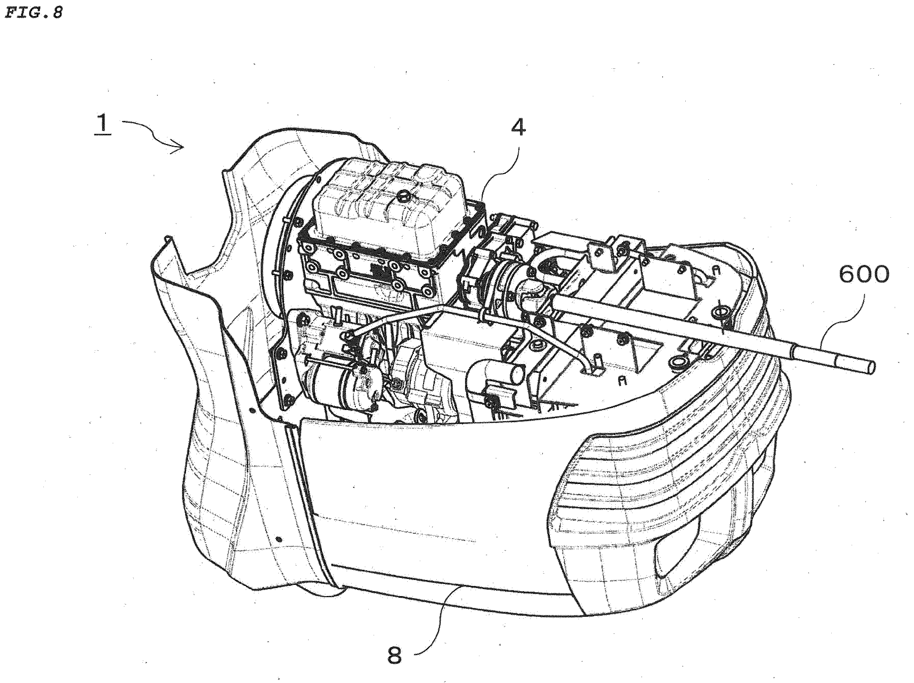

Here, in FIG. 6 the bonnet 8 is shown, but in FIGS. 7 and 8 at least a part of the bonnet 8 is not shown in order to make understanding of the inner part configuration easier.

The front PTO shaft 600 is a shaft for performing motive force transmission to the snow-removing machine or the cleaning machine or the like, which is a front working machine, and is joined to the crank shaft of the engine 4.

And, the front PTO shaft 600 goes through the lower side of the bracket of the battery 29 and the lower side of the radiator 28, and protrudes from the notch provided at the bonnet 8 to the front side of the tractor 1.

Further, not only the cylinder of the power steering controller unit 100, the crank shaft of the engine 4, the hood of the bonnet 8, the bracket of the battery 29, and the radiator 28, but also the bracket of the axle and the like are arranged in such a manner that interference with the front PTO shaft 600 is not generated.

Because of that, the front working machine can be joined without large design modification which accompanies modification of peripheral components.

Additionally, the configuration (refer to FIG. 4A) of the lower part of the steering handle 3 of the tractor 1 of the present embodiment is not largely different than the configuration (refer to FIG. 4B) of the lower part of the manual steering handle of the tractor of an embodiment in an invention related to the present invention, from a viewpoint of the occupancy space called a steering column configuration space.

Because of that, specification modification is performed from the manual steering specification to the power steering specification without large design modification of the current machine which accompanies modification of peripheral components inside the dashcover, and the configuration which has all sorts of merits described above can be realized with ease.

### (Embodiment 2)

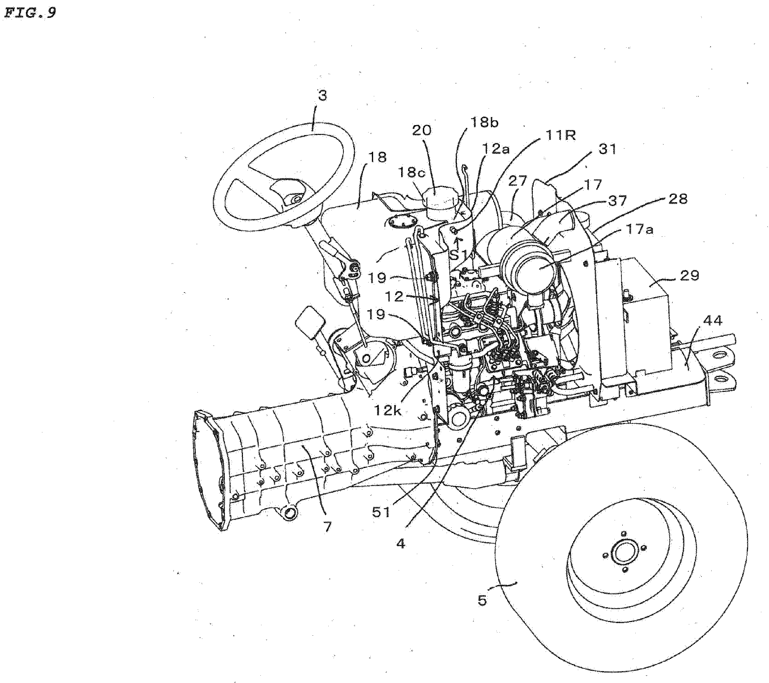

Next, mainly referring to FIGS. 9-20, descriptions are specifically given regarding the configuration and action of the tractor 1 of the present embodiment.

Additionally, FIG. 9 is a perspective view of the periphery of the engine 4 of Embodiment 2 in an invention related to the present invention.

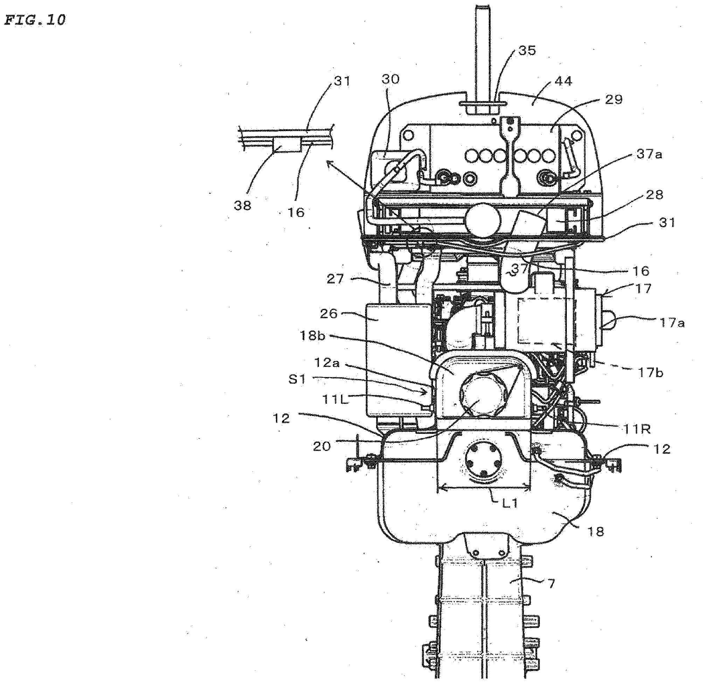

Moreover, FIG. 10 is a plan view of the periphery of the engine 4 of Embodiment 2 in an invention related to the present invention.

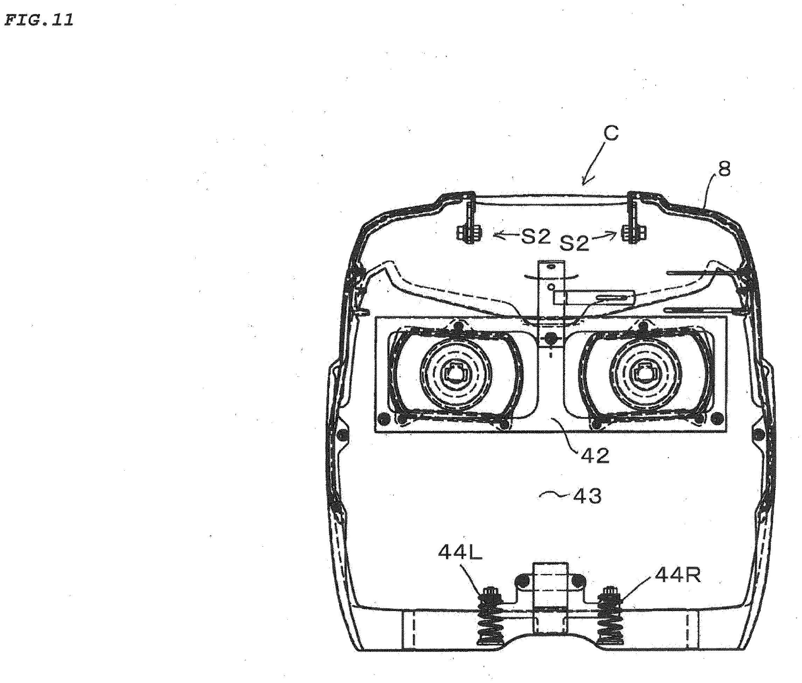

Moreover, FIG. 11 is a rear view of the bonnet 8 of Embodiment 2 in an invention related to the present invention.

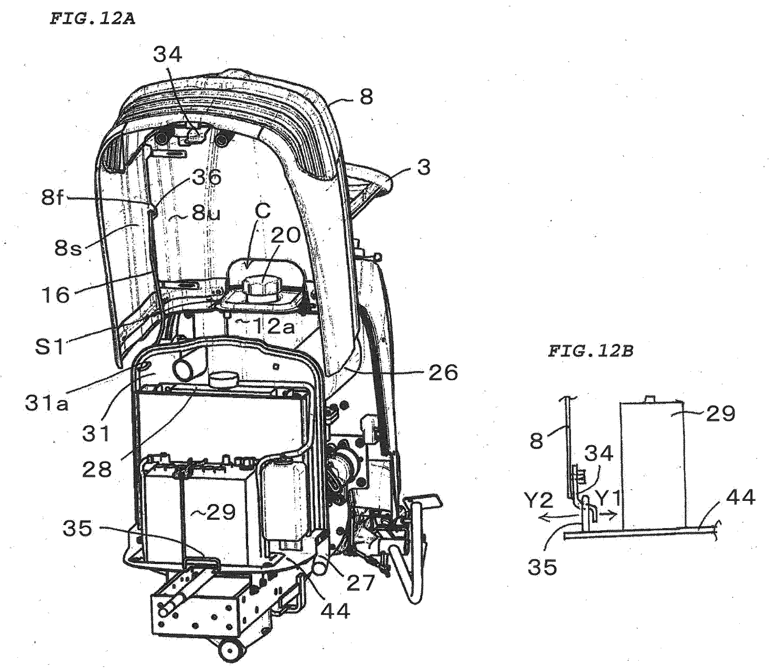

Moreover, FIG. 12A is a perspective view of the state where the bonnet 8 of Embodiment 2 in an invention related to the present invention is opened, and FIG. 12B is a section view of the front part of the bonnet 8 of Embodiment 2 in an invention related to the present invention.

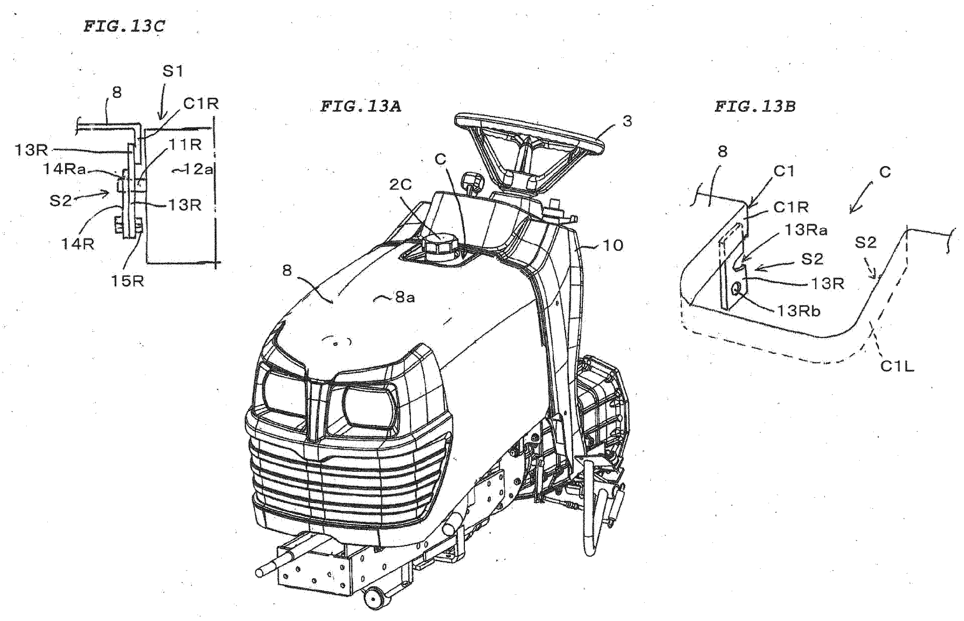

Moreover, FIG. 13A is a perspective view of the front part of the tractor 1 of Embodiment 2 in an invention related to the present invention, FIG. 13B is a perspective view of the opening-and-closing supporting part S of the rear part of the bonnet 8 of Embodiment 2 in an invention related to the present invention, and FIG. 13C is a section view of the opening-and-closing supporting part S of the rear part of the bonnet 8 of Embodiment 2 in an invention related to the present invention.

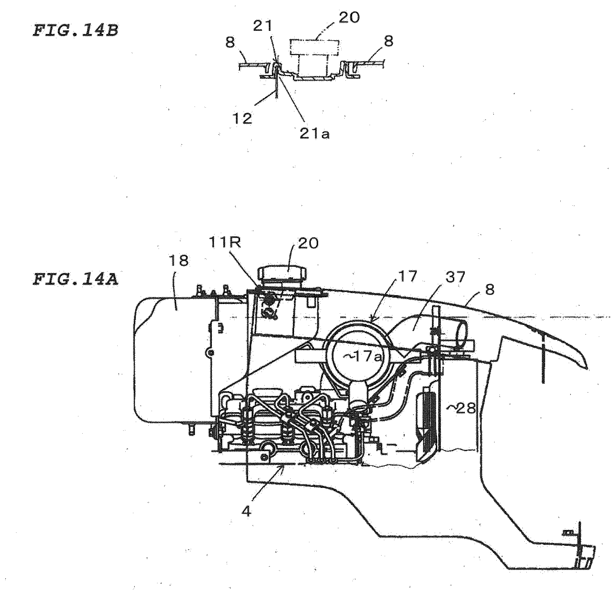

Moreover, FIG. 14A is a right side view of the state where the bonnet 8 of Embodiment 2 in an invention related to the present invention is closed, and FIG. 14B is a partial enlarged right side view of the state where the bonnet 8 of Embodiment 2 in an invention related to the present invention is closed.

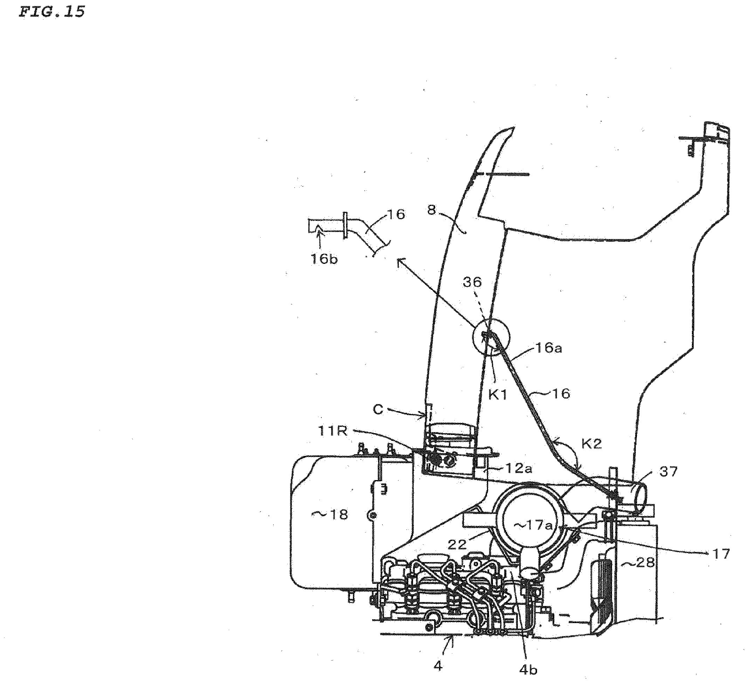

Moreover, FIG. 15 is a right side view of the state where the bonnet 8 of Embodiment 2 in an invention related to the present invention is opened.

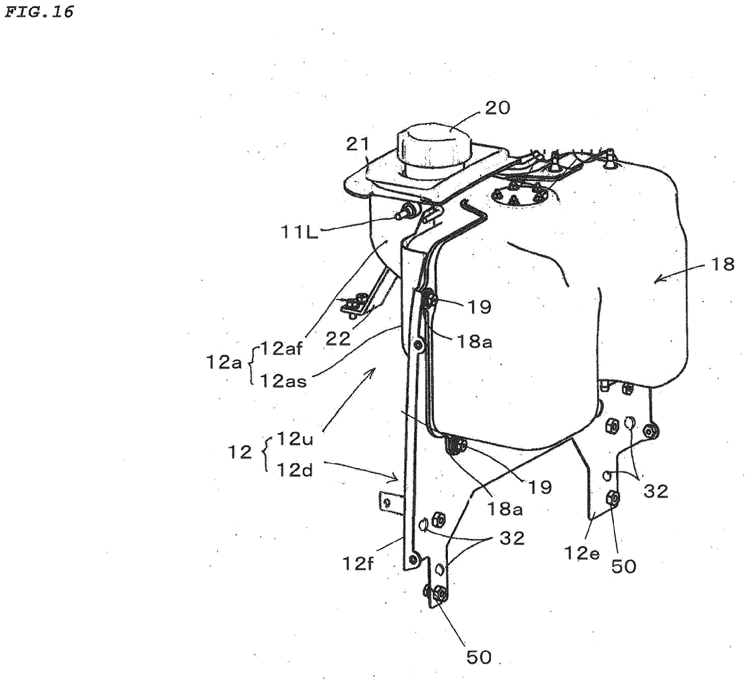

Moreover, FIG. 16 is a perspective view of the partition plate 12 and the fuel tank 18 of Embodiment 2 in an invention related to the present invention.

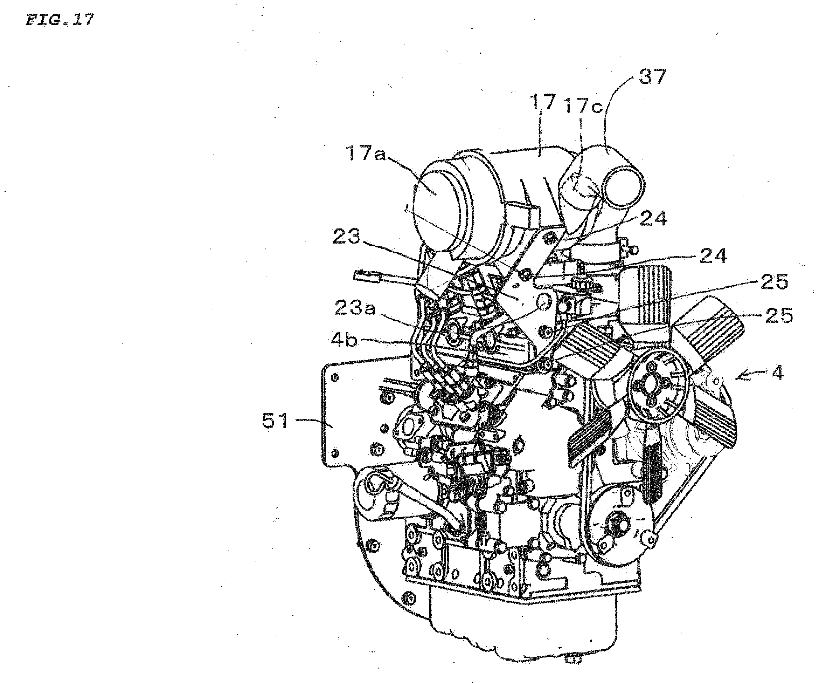

Moreover, FIG. 17 is a perspective view of the engine 4 of Embodiment 2 in an invention related to the present invention.

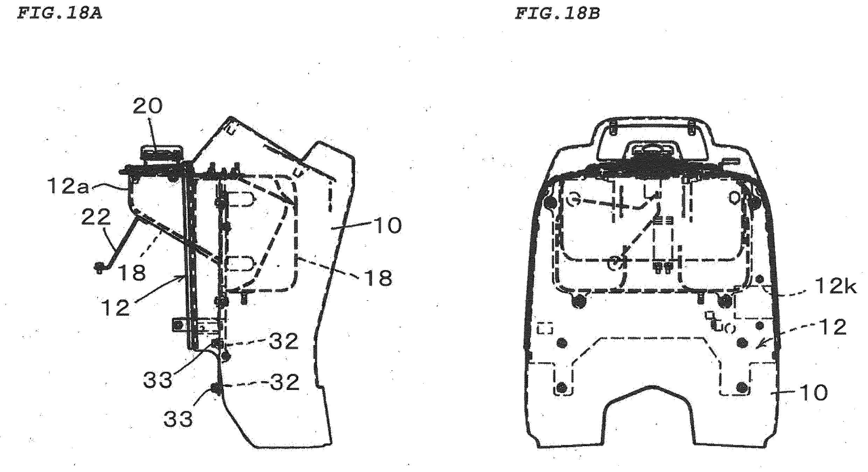

Moreover, FIG. 18A is a left side view of the partition plate 12, the fuel tank 18 and the dashboard 10 of Embodiment 2 in an invention related to the present invention, and FIG. 18B is a rear view of the partition plate 12, the fuel tank 18 and the dashboard 10 of Embodiment 2 in an invention related to the present invention.

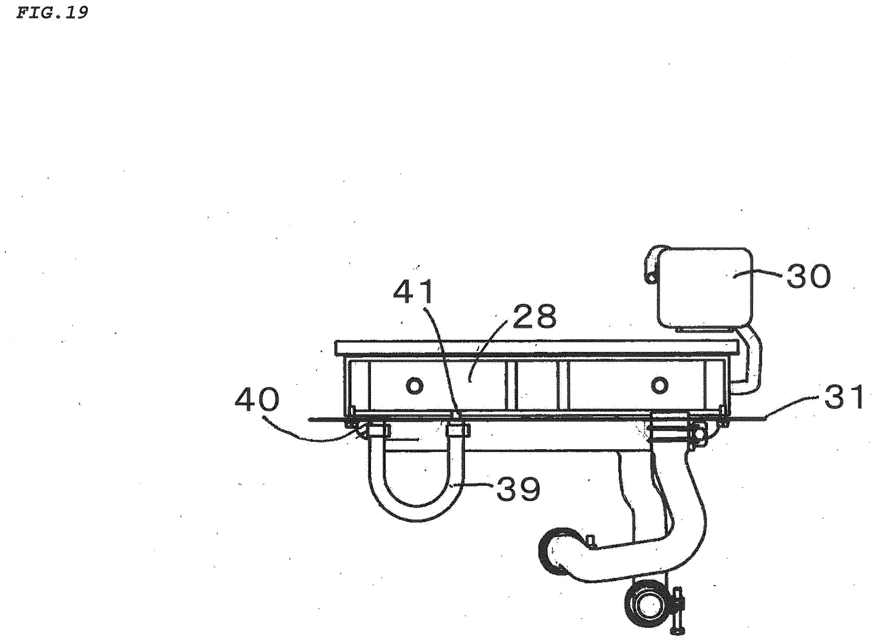

Moreover, FIG. 19 is a bottom view of the radiator 28 of Embodiment 2 in an invention related to the present invention.

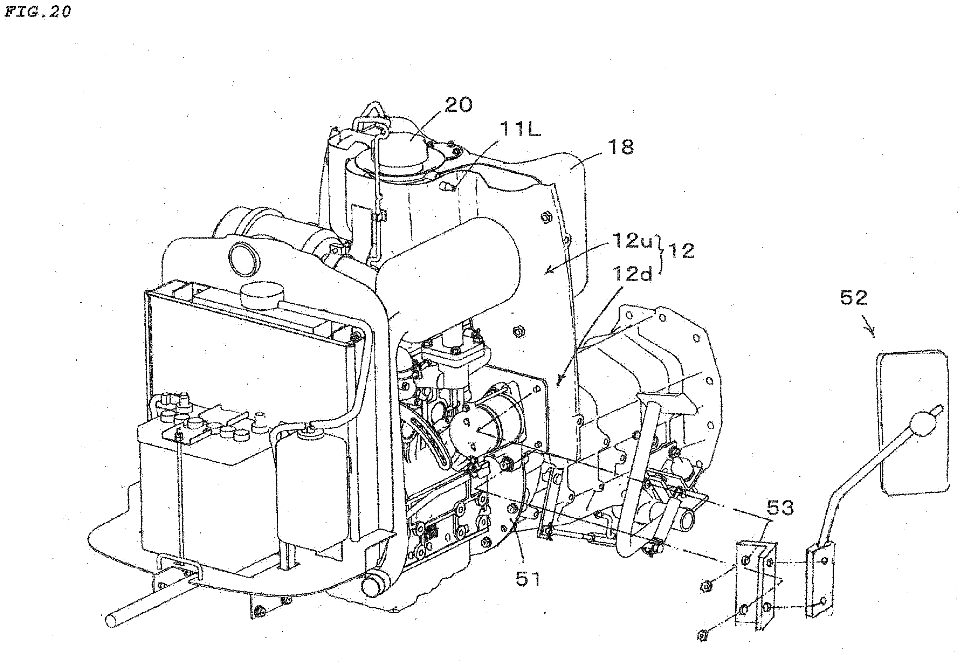

Moreover, FIG. 20 is a perspective view of the periphery of the engine 4 of Embodiment 2 in an invention related to the present invention.

Now, the configuration of the tractor 1 of the present embodiment is analogous to the configuration of the tractor 1 of Embodiment 1 described above but, for example, since there are points of difference in the configuration related to the bonnet 8, in what follows descriptions are given regarding those points of difference.

Descriptions are given regarding the supporting and opening-and-closing configurations of the bonnet 8.

FIG. 9 is a perspective view of the state where the bonnet 8 is detached, and FIG. 10 is a plan view of the state where the bonnet 8 is detached. The opening-and-closing supporting part S of the bonnet 8 which covers the engine 4 is configured with the supporting part S1 on the machine-body side and the attaching part S2 on the side of the bonnet 8. At the supporting part S1 on the machine-body side, the left and right rotation-pivots 11L, 11R are provided so as to have a common lateral pivot-center. Moreover, the attaching part S2 configured at the rear upper part on the side of the bonnet 8 is attached to the left and right rotation-pivots 11L, 11R so as to be rotatable, and the front side of the bonnet 8 is opened and closed. Additionally, the pivot-center is positioned at the upper part of the bonnet 8 on the rear-end side.

And, the notch part C is formed at the upper-face central part of the rear-end part of the bonnet 8 so as to avoid in plan view the supporting part S1 on the machine-body side described above. At the time of opening and closing of the bonnet 8, the rear-end part does not hit on the supporting part S1 on the machine-body side. By means of this, the front side of the bonnet 8 is largely opened.

The engine room 4a, and the operation part 2a which has the operation seat 2, the steering handle 3 and the like are separated with the partition plate 12. In this partition plate 12, the swelling part 12a is configured towards the front side of the machine-body.

This swelling part 12a is configured with a metal plate integrally with other portions of the partition plate 12. In detail, the partition plate 12 consists of the lower-half part 12d and the upper-half part 12u, the lower-half part 12d is shaped like a flat plate, the upper-half part 12u is configured in a shape which swells toward the frontward side as described above, and a reinforcement configuration is realized by swelling-formation of a metal-plate-material so that the bonnet 8 can be stably supported via the rotation-pivots 11L, 11R. By the reinforcement configuration by swelling-formation described above, the number of components is reduced so that an inexpensive configuration is realized.

The swelling part 12a is configured with the left-and-right width L1, so that the left rotation-pivot 11L is provided on the left side of the swelling part 12a, and the right rotation-pivot 11R is provided on the right side of the swelling part 12a. Moreover, the swelling part 12a may be configured with another member (left and right plates or a convexity plate) other than the partition plate 12, and be integrally configured with welding or the like. When the left and right plates are welded to the partition plate 12, then the left-and-right width L1 is ensured, so that the left rotation-pivot 11L is provided at the left plate, and the right rotation-pivot 11R is provided at the right plate. Also regarding the convexity plate, the left-and-right width L1 is ensured, so that the left rotation-pivot 11L is provided on the left side of the convexity plate, and the right rotation-pivot 11R is provided on the right side of the convexity plate. As described above, this swelling part 12a is configured at the supporting part S1 on the machine-body side. By means of this, another member which supports the supporting part S1 becomes unnecessary.

On the other hand, since on the side of the bonnet 8, the attaching part S2 on the side of the bonnet 8 is configured, descriptions are given in detail regarding this attaching part S2.

In FIG. 11, a figure such that the bonnet 8 is viewed from the machine-body rear side is shown. Since FIG. 12 shows a figure such that the state where the bonnet 8 is opened is viewed from the machine-body front side, the bonnet 8 itself is viewed from the lower side. Moreover, FIG. 13A shows a perspective view such that the bonnet 8 is viewed from the machine-body front side.

In the central rear-end part of the upper-face part 8a of the bonnet 8, the notch part C is formed. This notch part C is concavely formed. In FIG. 13B an enlarged view of the portion of the notch part C is shown.

In the portion of the notch part C which is concavely formed, the swelling part 12a is arranged so as to correspond thereto. Namely, the notch part C is formed in the bonnet 8 so as to avoid the swelling part 12a. Further, along the whole circumference of the notch part C which is concavely formed, the folding part C1 is formed.

And, to the right-side folding part C1 R of the folding part C1, the right attaching plate 13R is anchored with welding. In this right attaching plate 13R, the concave part 13Ra into which the right rotation-pivot 1 R goes is formed. Moreover, in the right attaching plate 13R, the hole part 13Rb is formed. After the right rotation-pivot 11R is inserted into the concave part 13Ra of the right attaching plate 13R, the right rotation-pivot 11R is inserted into the hole part 14Ra of the right fixation plate 14R, and the right attaching plate 13R and the right fixation plate 14R are fastened and fixed with the bolt and nut 15R. In FIG. 13C a section view of this configuration is shown. Since the attachment of the left rotation-pivot 11L is similar to the above-described attachment of the right rotation-pivot 11R, descriptions are omitted.

As described above, in the partition plate 12, the swelling part 12a is configured towards the front side of the machine-body, the left rotation-pivot 11L is provided on the left side of this swelling part 12a, and the right rotation-pivot 11R is provided on the right side of the swelling part 12a. And, the notch part C is formed in the bonnet 8 so as to avoid in plan view the swelling part 12a. By means of this, since against the swelling part 12a which supports the left and right rotation-pivots 11L, 11R, the rear portion of the bonnet 8 does not hit, the bonnet 8 can, in case it is opened upward on the left and right rotation-pivots 11L, 11R, rotate beyond the vertical line to the position where the upper-face part 8a of the bonnet 8 hits on the partition plate 12. Hereupon, as shown in FIG. 15, in the state where the bonnet 8 is opened approximately in the vertical direction, it is fixed and supported with the rod 16 for fixation. In FIG. 14, the state where the bonnet 8 is closed is shown.

As shown in FIGS. 12 and 15, the rod 16 for fixation is inserted into the hole 36 which is formed in the bonnet 8, the angle K1 between this insertion part and the portion 16a towards the side of the other end of the rod 16 for fixation (the machine-body front side) is configured to be an obtuse angle, and thereby the openness degree of the bonnet 8 is made broad. Moreover, in the rod 16 for fixation the notch part 16b is formed, the notch part 16b engages with the hole 36 when the rod 16 for fixation is inserted into the hole 36 which is formed in the bonnet 8, and thereby the rod 16 for fixation becomes less prone to come off. In FIG. 15, an enlarged view of the portion of the notch part 16b inside the circle which encircles the hole 36 is also schematically shown.

Since the hole 36 which is formed in the bonnet 8 is formed in the flange 8f which connects the upper-part-bonnet 8u and the side-bonnet 8s that configure the bonnet 8, another member for forming the hole 36 in the bonnet 8 becomes unnecessary.

Moreover, the side of the other end of the rod 16 for fixation (corresponding to the machine-body front side) is inserted into the hole 31a of the front-partition-plate 31. This hole 31a of the front-partition-plate 31 is formed with a diameter which is roughly 1.5 times as large as the diameter of the rod 16 for fixation. By means of this, since the freedom degree of motion of the rod 16 for fixation regarding the up-and-down direction, the front-and-rear direction and the left-and-right direction becomes large, treatment becomes easy. And, since also at the portion where the rod 16 for fixation is inserted into the hole 31a a of the front-partition-plate 31, the flexure angle of the rod 16 for fixation is formed to be an obtuse angle, treatment becomes easy.

Moreover, with the angle K2 which is formed by the rod 16 for fixation, the angle at the time when the bonnet 8 is opened can be determined.

In the plan view of FIG. 10, the storage state at the time when the rod 16 for fixation is not used is also shown. The rod 16 for fixation can, since being stored so as to press the air cleaner duct 37 which consists of a resin-material from the upper side, suppress the vibration of the air cleaner duct 37. Moreover, the air cleaner duct 37 can, since being configured with a resin-material, suppress the vibration of the rod 16 for fixation. The air cleaner duct 37 is configured so as to feed the outside air into the inside of the air cleaner storage case 17.

Moreover, the annular engaging body 38 which consists of a resin-material is attached to the front-partition-plate 31, and the rod 16 for fixation is fitted to this annular engaging body 38 so that the rod 16 for fixation is stored and fixed. In FIG. 10, an enlarged view of the portion of the annular engaging body 38 inside the circle which encircles a part of the front-partition-plate 31 is also schematically shown.

Moreover, since the light cover 42 and the light grill 43 are integrally configured with a resin-material, the number of components is lessened.

Moreover, to the lower part of the front side of the bonnet 8, the spring plate 34 is attached and, in case the bonnet 8 is lowered below and closed, then the spring plate 34 is engaged with the lock bar 35. In FIG. 12B, the state where the spring plate 34 engages with the lock bar 35 is shown. Since the spring plate 34 always functions in the direction of the arrow Y1 so as to return, the spring plate 34 does not come off from the lock bar 35. Moreover, in case force is applied in the direction of the arrow Y1 with the spring plate 34 held by hand, then the spring plate 34 comes off from the lock bar 35 and the bonnet 8 becomes able to ascend.

The compression springs 44L, 44R are provided on both sides of the spring plate 34 and, when the bonnet 8 is closed, since the left and right compression springs 44L, 44R abut against the front-part-plate 44 (refer to FIG. 10), and are compressed to a certain extent, then the force which makes the spring plate 34 engage with the lock bar 35 becomes strong. By means of this, the bonnet 8 is securely maintained in the state of being closed.

FIG. 16 is a figure such that the fuel tank 18 is viewed obliquely left from behind. As shown in FIGS. 16 and 9, the fuel tank 18 is attached to the rear side of the partition plate 12. By means of this, another member which supports the fuel tank 18 becomes unnecessary.

The flange part 18a of the fuel tank 18 and the partition plate 12 are made to be fixed with the bolts and nuts 19. These fixation portions are configured at two spots on the left side and two spots on the right side. In FIG. 16, the bolts and nuts 19 at two spots on the left side are shown. In FIG. 9, the bolts and nuts 19 at two spots on the right side are shown.

The central front-side portion of the fuel tank 18 is configured with the fuel tank convex part 18b. And, the fuel tank convex part 18b which is a portion of the fuel tank 18 gets into the rear side of the swelling part 12a of the partition plate 12. By means of this, the capacity of the fuel tank 18 increases.

The partition plate 12 is, as shown in FIG. 16, with bolts inserted into the holes 50, 50 for bolt-fastening of the left-and-right leglike parts 12e, 12e of the lower-half part 12d, installed on the vehicle-body-side plate outside the region shown in the figure. Additionally, the brackets 12f, 12f being for reinforcement-fastening are provided at the left-and-right end parts on the side of the lower-half part 12d of the partition plate 12, and the partition plate 12 is appropriately fixed. The vehicle-body-side plate described above is the intermediate plate 51 which connects as a rigid body the frame rear part of the engine 4 and the case portion of the speed-changing device 7.

The swelling part 12a of the partition plate 12, in FIG. 16, with the second swelling part 12as slightly broad in width formed so as to continue to the first swelling part 12af in addition to the first swelling part 12af for installing the left and right rotation-pivots 11L, 11R, continues to the lower-half part 12d. Particularly, these swelling shapes are, considering the relations with the peripheral equipment, formed in such a manner that the capacity of the fuel tank 18 is ensured.

In the fuel tank convex part 18b, the oil-supplying port 18c is formed on its upper-face, and the fuel cap 20 is provided on its opening part. Around the cylindrical erection part of the oil-supplying port 18c, the fuel saucer 21 is provided. This fuel saucer 21 is made of rubber, and the folding-back engaging groove 21a is formed on the outer periphery with double structure, and is made to fit into the upper-edges of the first swelling part 12af and the second swelling part 12as of the partition plate 12 so that the fuel saucer 21 is fixed. Moreover, the shallow bottom portion on the outer periphery side, and the deep bottom portion which is near to the side of the oil-supplying port 18c are formed, and fuel which spills over at the time of oil-supplying and fuel which overflows from the oil-supplying port 18c can be received. In addition to this, the fuel saucer 21 can be configured in such a manner that the fuel tank 18 is not directly viewed from the notch part C of the bonnet 8. The fuel tank 18 may be configured with a metal plate, and may be configured with a resin.

Moreover, as shown in FIGS. 15 and 16, on the lower side of the swelling part 12a of the partition plate 12, the front supporting stay 22 is provided between the partition plate 12 and the cylinder head 4b of the engine 4. By means of this, the vibration of the partition plate 12 and the fuel tank 18 is suppressed, and the loading at the time when the inside of the fuel tank 18 is fully filled with fuel is supported.

As shown in FIG. 16, in the lower part of the partition plate 12, the two holes 32 are formed on the left side, and the two holes 32 are formed also on the right side. And, as shown in FIG. 18, the lower part of the partition plate 12 is fixed to the lower part of the dashboard 10 with the bolts and nuts 33. By means of this, supporting of the partition plate 12 becomes firm.

As shown in FIG. 15, in case the bonnet 8 rotates approximately to the vertical position, then the approximately whole of the air cleaner storage case 17 becomes visible. As shown in FIGS. 9 and 10, the air cleaner storage case 17 is arranged ahead of the swelling part 12a of the partition plate 12. And, the air cleaner storage case 17 is in a cylindrical shape, and its longitudinal direction is the left-and-right direction of the machine-body. Inside the air cleaner storage case 17, the air cleaner element 17b is stored. On the right side of the air cleaner storage case 17, the storage lid 17a is provided. This storage lid 17a is taken off, and thereby the air cleaner element 17b inside the air cleaner storage case 17 can be attached/detached from the right side of the machine-body.

As described above, since in case the bonnet 8 rotates approximately to the vertical position, then the approximately whole of the air cleaner storage case 17 becomes visible, attachment/detachment of the storage lid 17a of the air cleaner storage case 17, and attachment/detachment of the air cleaner element 17b inside the air cleaner storage case 17 can be performed with ease without being obstructed by the bonnet 8. Moreover, since the air intake port 17c of the air cleaner storage case 17 is directed towards the machine-body frontward, joining with the air cleaner duct 37 becomes easy.

As shown in FIG. 17, the air cleaner storage case 17 is attached to the upper part of the engine 4. FIG. 17 is a figure such that the air cleaner storage case 17 is viewed in an obliquely right direction from the machine-body frontward. To the front side of the air cleaner storage case 17, the air cleaner supporting stay 23 is attached with the bolts 24. And, the lower part of the air cleaner supporting stay 23 is attached to the front side of the cylinder head 4b with the bolts 25.

Moreover, in the air cleaner supporting stay 23, the hole 23a is formed. In a case where the air cleaner storage case 17 is taken off from the air cleaner supporting stay 23, the hole 23a of the air cleaner supporting stay 23 can be utilized for a hanger for hanging and displacing the engine 4.

As shown in FIGS. 9, 10 and 12, on the left side of the swelling part 12a of the partition plate 12, the muffler 26 is arranged, and the air exhaust tube 27 towards the lower side of the machine-body is attached. Ahead of the air cleaner storage case 17, the radiator 28 is loaded via the front-partition-plate 31 and, ahead of the radiator 28, the battery 29 is loaded. On the left side of the battery 29, the cooling water sub-tank 30 of the engine 4 is loaded.

FIG. 19 is a figure such that the radiator 28 is viewed from the lower side. To the drain port 41 which discharges the cooling water inside the radiator 28, the drain hose 39 is attached. The side of the other end of the drain hose 39 is inserted into the protrusion part 40. By means of this, in case the drain hose 39 is taken off from the protrusion part 40, then the cooling water inside the radiator 28 can be discharged with ease.

The configuration of Embodiment 2 in an invention related to the present invention described above, in a case where the supporting configuration of the fuel tank is simplified, and the rear part of the bonnet is effectively utilized to arrange and configure the fuel tank, solves a problematic point that its supporting structure accompanies juxtaposition with a heat-shielding plate and is complicated.

Namely, the first invention related to the present invention is a working vehicle, wherein
at a rear part of a bonnet (8) which covers an engine (4), a partition plate (12) is provided in a standing manner via a vehicle-body-side plate (51),
a swelling part (12a) is provided in the partition plate (12), and
behind the partition plate (12), a fuel tank (18) is arranged in such a manner that a convex part (18b) which is swelled and formed ahead of the fuel tank (18) enters the swelling part (12a) of the partition plate (12), the fuel tank (18) is anchored to the partition plate (12), and a fuel supplying port (18c) is arranged on the convex part (18b) which is positioned in the swelling part (12a).

In case the configuration is allowed to be like this, then behind the partition plate (12), towards the swelling part (12a) of the partition plate (12), the convex part (18b) can enter, and enlargement-and-ensurance of the tank capacity is to be contemplated.

The second aspect related to the present invention is such that, in the invention related to the present invention, the partition plate (12) is made to be a metal-plate-material which consists of an upper-half part (12u) and a lower-half part (12d), wherein in the upper-half part (12u), a first swelling part (12af) is formed and a second swelling part (12as) slightly broad in width is formed so as to be continuing to the first swelling part (12af).

By swelling and forming a metal-plate-material, rigidifying of the supporting configuration portion of the fuel tank (18) is to be contemplated.

The third aspect related to the present invention is such that, in the first or second aspects related to the present invention, an engaging groove (21a) which is formed on a fuel saucer (21) is fitted into an upper-edge of the swelling part (12a) so that the fuel saucer (21) is supported. Fuel which has overflown from the fuel supplying port (18c) is received with the fuel saucer (21).

The invention related to the present invention is such that, because towards the swelling part (12a) of the partition plate (12), the convex part (18b) can enter, enlargement-and-ensurance of the tank capacity is to be contemplated.

The second aspect related to the present invention is such that, in addition to the effects of the first invention related to the present invention, because by swelling and forming a metal-plate-material, rigidifying of the supporting configuration portion of the fuel tank (18) is to be contemplated, the reinforcement structure is made to lessen so that simplification of the configuration is to be contemplated.

The third aspect related to the present invention is such that, in addition to the effects of the first or second aspects related to the present invention, because the engaging groove (21a) which is formed on the fuel saucer (21) is fitted into the upper-edge of the swelling part (12a) so that the fuel saucer (21) is supported, the attaching configuration can be simplified.

The configurations of the present embodiments described above are able to be utilized not only for an agri-working machine such as a tractor or the like but also for a general vehicle.

A working vehicle in the present invention is able to make the oil-pressure hoses for power steering be more easily stored and, for example, is useful for an objective of use as a working vehicle such as an agricultural tractor or the like, with a fuel tank arranged at the rear part inside the engine bonnet.

## Claims

1. A working vehicle (1), comprising:
an engine (4);
a bonnet (8) which covers the engine (4);
an operation part (2a);
a steering handle (3) of the operation part (2a);
a power steering controller unit (100) to which the steering handle (3) is joined; and
plural oil-pressure hoses (200) joined to the power steering controller unit (100),
**characterized in that**
a front-and-rear direction is a movement direction on an occasion when the working vehicle (1) moves straight on, and
the working vehicle (1) comprises:
a partition plate (12) which separates the engine (4) and the operation part (2a);
a fuel tank (18) with the partition plate (12) being arranged between the engine (4) and the fuel tank (18) with reference to the front-and-rear-direction;
a pedestal (300) on which the power steering controller unit (100) is placed; and
a supporting pipe member (400) which is connected to a left side and a right side of the pedestal (300) so as to support the pedestal (300), and extends in an up-and-down direction, wherein
an oil-supplying port (18c) is formed on an upper-face of a fuel tank convex part (18b) of the fuel tank (18) which protrudes to a front side, where a fuel cap (20) of the oil-supplying port (18c) is arranged in a notch part (C) formed at an upper-face of the bonnet (8),
the oil-pressure hoses (200) include: a power steering hose (202) through which oil goes that goes into the power steering controller unit (100); a return hose (203) through which oil goes that has gone out from the power steering controller unit (100); and cylinder hoses (204L, 204R) through which oil goes at time of right-turn execution or time of left-turn execution,
on a face of the fuel tank (18) reverse to a face of the fuel tank (18) which faces the partition plate (12), a concave part (18p) through which the oil-pressure hoses (200) pass is formed so as to extend in the up-and-down direction,
in the concave part (18p), the power steering hose (202), the return hose (203), and the cylinder hoses (204L, 204R) are arranged.

2. A working vehicle (1) according to claim 1, wherein
an upper-end part (400u) of the supporting pipe member (400) is connected to the pedestal (300),
a lower-end part (400d) of the supporting pipe member (400) is bending, and
the oil-pressure hoses (200) are supported by an upper-face of the lower-end part (400d) of the supporting pipe member (400).

3. A working vehicle (1) according to claim 1, comprising:
a transmission case (7);
a supporting body (500) which supports a lower-end part (400d) of the supporting pipe member (400), and is connected to the transmission case (7); and
a flow-dividing valve (210) of the oil-pressure hoses (200), wherein
an upper-end part (400u) of the supporting pipe member (400) is connected to the pedestal (300), and
the flow-dividing valve (210) is adjacent to at least one of left and right of the supporting body (500), and is arranged below the fuel tank (18).

4. A working vehicle (1) according to claim 2, comprising:
a transmission case (7);
a supporting body (500) which supports the lower-end part (400d) of the supporting pipe member (400), and is connected to the transmission case (7); and
a flow-dividing valve (210) of the oil-pressure hoses (200), wherein
the flow-dividing valve (210) is adjacent to at least one of left and right of the supporting body (500), and is arranged below the fuel tank (18).

## Patentansprüche

1. Arbeitsfahrzeug (1), das umfasst:
einen Motor (4);
eine Motorhaube (8), die den Motor (4) abdeckt;
einen Bedienteil (2a);
einen Lenkgriff (3) des Bedienteils (2a);
eine Lenkhilfesteuereinheit (100), mit der der Lenkgriff (3) verbunden ist; und
mehrere Öldruckschläuche (200), die mit der Lenkhilfesteuereinheit (100) verbunden sind,
**dadurch gekennzeichnet, dass**
eine Front- und Heck-Richtung eine Bewegungsrichtung ist, wenn sich das Arbeitsfahrzeug (1) geradeaus bewegt, und
das Arbeitsfahrzeug (1) umfasst:
eine Trennplatte (12), die den Motor (4) und den Bedienteil (2a) trennt;
einen Treibstofftank (18), wobei die Trennplatte (12) in Bezug auf die Front-und-Heck-Richtung zwischen dem Motor (4) und dem Treibstofftank (18) angeordnet ist;
einen Sockel (300), auf dem die Lenkhilfesteuereinheit (100) platziert ist; und
ein Stützrohrelement (400), das mit einer linken Seite und einer rechten Seite des Sockels (300) verbunden ist, um den Sockel (300) zu stützen, und sich in einer Nach-oben- und-Nach-unten-Richtung erstreckt, wobei
eine Ölzufuhröffiiung (18c) auf einer Oberseite eines konvexen Treibstofftankteils (18b) des Treibstofftanks (18) gebildet ist, die zu einer Vorderseite vorsteht, wobei ein Tankdeckel (20) der Ölzufuhröffiiung (18c) in einem Kerbenteil (C) angeordnet ist, der auf einer Oberseite der Motorhaube (8) gebildet ist,
die Öldruckschläuche (200) umfassen: einen Lenkhilfeschlauch (202), durch den Öl fließt, das in die Lenkhilfesteuereinheit (100) fließt; einen Rücklaufschlauch (203), durch den Öl fließt, das aus der Lenkhilfesteuereinheit (100) geflossen ist; und Zylinderschläuche (204L, 204R), durch die Öl zum Zeitpunkt, wenn eine Rechtswende durchgeführt wird, oder zum Zeitpunkt, wenn eine Linkswende durchgeführt wird, fließt,
auf einer Fläche des Treibstofftanks (18) rückwärts einer Fläche des Treibstofftanks (18), die der Trennplatte (12) zugewandt ist, einen konkaven Teil (18p), durch den die Öldruckschläuche (200) laufen, der so ausgebildet ist, dass er sich in Nach-oben-und-Nachunten-Richtung erstreckt,
im konkaven Teil (18b) der Lenkhilfeschlauch (202), der Rücklaufschlauch (203) und die Zylinderschläuche (204L, 204R) angeordnet sind.

2. Arbeitsfahrzeug (1) nach Anspruch 1, wobei
ein oberer Endteil (400u) des Stützrohrelements (400) mit dem Sockel (300) verbunden ist,
ein unterer Endteil (400d) des Stützrohrelements (400) gebogen ist, und
die Öldruckschläuche (200) von einer Oberseite des unteren Endteils (400d) des Stützrohrelements (400) gestützt werden.

3. Arbeitsfahrzeug (1) nach Anspruch 1, das umfasst:
ein Getriebegehäuse (7);
einen Stützkörper (500), der einen unteren Endteil (400d) des Stützrohrelements (400) stützt und mit dem Getriebegehäuse (7) verbunden ist; und
ein Strömungsteilerventil (210) der Öldruckschläuche (200), wobei
ein oberer Endteil (400u) des Stützrohrelements (400) mit dem Sockel (300) verbunden ist, und
das Strömungsteilerventil (210) zumindest einem von links und rechts des Stützkörpers (500) benachbart ist und unter dem Treibstofftank (18) angeordnet ist.

4. Arbeitsfahrzeug (1) nach Anspruch 2, das umfasst:
ein Getriebegehäuse (7);
einen Stützkörper (500), der den unteren Endteil (400d) des Stützrohrelements (400) stützt und mit dem Getriebegehäuse (7) verbunden ist; und
ein Strömungsteilerventil (210) der Öldruckschläuche (200), wobei
das Strömungsteilerventil (210) zumindest einem von links und rechts des Stützkörpers (500) benachbart ist und unter dem Treibstofftank (18) angeordnet ist.

## Revendications

1. Véhicule de travail (1) comprenant :
un moteur (4) ;
un capot (8) qui recouvre le moteur (4) ;
une partie de commande (2a) ;
une poignée de direction (3) de la partie de commande (2a) ;
une unité de commande de direction assistée (100) à laquelle la poignée de direction (3) est assemblée ; et
une pluralité de tuyaux de pression d'huile (200) assemblés à l'unité de commande de direction assistée (100),
caractérisé en ce qui :
une direction avant et arrière est une direction de déplacement au moment où le véhicule de travail (1) se déplace en ligne droite, et
le véhicule de travail (1) comprend :
une plaque de séparation (12) qui sépare le moteur (4) et la partie de commande (2a) ;
un réservoir de carburant (18) avec la plaque de séparation (12) qui est agencée entre le moteur (4) et le réservoir de carburant (18) en référence à la direction avant et arrière ;
un socle (300) sur lequel l'unité de commande de direction assistée (100) est placée ; et
un élément de tuyau de support (400) qui est raccordé à un côté gauche et un côté droit du socle (300) afin de supporter le socle (300), et s'étend dans une direction de haut en bas, dans lequel :
un orifice d'alimentation en huile (18c) est formé sur une face supérieure d'une partie convexe de réservoir de carburant (18b) du réservoir de carburant (18) qui fait saillie vers un côté avant, où un capuchon de carburant (20) de l'orifice d'alimentation en huile (18c) est agencé dans une partie d'encoche (C) formée au niveau d'une face supérieure du capot (8),
les tuyaux de pression d'huile (200) comprennent : un tuyau de direction assistée (202) à travers lequel l'huile va dans l'unité de commande de direction assistée (100) ; un tuyau de retour (203) à travers lequel l'huile revient de l'unité de commande de direction assistée (100) ; et des tuyaux de cylindre (204L, 204R) à travers lesquels l'huile passe au moment de l'exécution d'un virage à droite et au moment de l'exécution d'un virage à gauche,
sur une face de réservoir de carburant (18) opposée à une face de réservoir de carburant (18) qui fait face à la plaque de séparation (12), une partie concave (18p) à travers laquelle les tuyaux de pression d'huile (200) passent, est formée afin de s'étendre dans la direction de haut en bas,
dans la partie concave (18p), le tuyau de direction assistée (202), le tuyau de retour (203) et les tuyaux de cylindre (204L, 204R) sont agencés.

2. Véhicule de travail (1) selon la revendication 1, dans lequel :
une partie d'extrémité supérieure (400u) de l'élément de tuyau de support (400) est raccordée au socle (300),
une partie d'extrémité inférieure (400d) de l'élément de tuyau de support (400) est pliée, et
les tuyaux de pression d'huile (200) sont supportés par une face supérieure de la partie d'extrémité inférieure (400d) de l'élément de tuyau de support (400).

3. Véhicule de travail (1) selon la revendication 1, comprenant :
un carter de transmission (7) ;
un corps de support (500) qui supporte une partie d'extrémité inférieure (400d) de l'élément de tuyau de support (400) et est raccordé au carter de transmission (7) ; et
une soupape de division d'écoulement (210) des tuyaux de pression d'huile (200), dans lequel :
une partie d'extrémité supérieure (400u) de l'élément de tuyau de support (400) est raccordée au socle (300), et
la soupape de division d'écoulement (210) est adjacente à au moins l'un parmi la gauche et la droite du corps de support (500) et est agencée au-dessous du réservoir de carburant (18).

4. Véhicule de travail (1) selon la revendication 2, comprenant :
un carter de transmission (7) ;
un corps de support (500) qui supporte la partie d'extrémité inférieure (400d) de l'élément de tuyau de support (400) et est raccordé au carter de transmission (7) ; et
une soupape de division d'écoulement (210) des tuyaux de pression d'huile (200), dans lequel :
la soupape de division d'écoulement (210) est adjacente à au moins l'une parmi la gauche et la droite du corps de support (500) et est agencée au-dessous du réservoir de carburant (18).
